# EUROPEAN PATENT SPECIFICATION

(11) **EP 1 123 893 B1**
(45) Date of publication and mention of the grant of the patent: **29.09.2004**
(21) Application number: 01200449.5
(22) Date of filing: 09.02.2001
(51) Int. Cl.: B66C 23/70, B66C 11/16, B60P 1/54

(54) **Crane**
Kran
Grue

(30) Priority: 09.02.2000 NL 1014332
(43) Date of publication of application: 16.08.2001
(73) Proprietor: Brandjes, Franciscus Engelbertus Maria, 1911 AS Uitgeest (NL)
(72) Inventor: Brandjes, Franciscus Engelbertus Maria, 1911 AS Uitgeest (NL)
(74) Representative: Van Breda, Jacobus

(56) References cited:
- EP-A- 0 425 389
- DE-B- 1 175 843
- DE-C- 193 294
- FR-A- 453 260
- US-A- 3 889 818
- US-A- 5 743 702

## Description

The present invention relates to a crane, comprising a hoisting cable, an outer jib and at least one inner jib, which can travel laterally in the outer jib between a first, essentially retracted position and a second, at least partly extended position, where the inner jib can be extracted from the outer jib via a first end of the outer jib and where at the crane a reel is provided for receiving the hoisting cable, wherein the reel is connected at or near a second end of the outer jib, wherein the inner jib comprises at its end which can extend outwards, a guide for guiding the hoisting cable

A crane as indicated above, is known from US patent no. 3,889,818. Said crane comprises an extensive number of heavy parts, to wit a piston assembly, a gear and/or pinion drive, and racks cooperation with said gears and/or pinions. Furthermore, according to said known crane, a hoisting hook is always positioned at the outermost end. The disadvantage of the crane known from US 3,889,818, is that the crane comprises several distinctive parts which are provided for obtaining the travelling out of the jibs. It would be preferred if one simple system would be available for obtaining the same result.

Furthermore, reference is made to US patent no. 4,187,048. In this patent a crane is described, which can travel from a retracted position to an extended position by means of an extending inner jib. At the most extended end of the inner jib is connected a cable reel with a cable, by means of which a load can be lifted, respectively lowered. As possible application of this crane, its mounting in a vehicle is mentioned. As the cable reel including the hoisting mechanism is carried out as a whole, a relatively large vertical volume of the vehicle is used up by the crane.

The known crane as described in said U.S. Patent Specification takes up a lot a space as one whole. As a small volume of the crane is important, especially when used in a vehicle, this known crane has never been applied on a large scale.

It is the purpose of the present invention to provide an improved crane. The purpose is especially to provide a crane which takes up less space than the known crane. The purpose is also to provide a crane which is simple to operate and with which loads can be placed in a vehicle or the like in a simple way. Besides application in vehicles, it must also be possible for the crane to be used in, for example, boats.

The advantages described above are obtained by means of a crane as described in the preamble, and which is characterised in that the hoisting cable is guided via the guide over a cable pulley which is connected to a traveller which can travel in the longitudinal direction of the inner jib, and in that the traveller is connected via a second cable or the like with the outer jib, which cable is guided via a second guide connected to the end which is directed inwards of the inner jib, in such a way that when the inner jib travels in the outer jib from the first, respectively the second position, to the second, respectively the first position, the vertical position of the end of the hoisting cable remains constant and simultaneously the traveller in the inner jib travels from the one end to the other end.

The crane according to the invention has the advantage that it takes up only very little vertical space. This is achieved in particular in that the reel with which the hoisting cable can be raised and lowered, does not necessarily have to be attached to the jib any more. Instead of a position at or near an end of the outer jib, it is also possible to attach the reel in a position further away from the jib; in the case of a vehicle for example near a side exit of the vehicle. In the event of an electrically operated reel, the operating panel for the reel can be mounted near an exit of the vehicle or possibly even separately on the outside of the vehicle, and the reel can be located in an arbitrary suitable place inside the vehicle.

The crane according to the invention can be made of any suitable material. The jibs for example can be made of aluminium or of fibre-reinforced synthetic material, which has the major advantage that the weight thereof can be kept relatively low. It is also possible to make for example the outer jib of a suitable type of steel, and the inner jib of aluminium. The surfaces for the lateral movement of the jib may be made of a suitable, wear-proof material.

The inner jib can move through the outer jib in a sliding way. It is also possible to let the inner jib travel over a suitable surface of the outer jib by means of roller wheels, or vice versa, in which case the roller wheels are located in the outer jib.

According to a further aspect, the present invention relates to a crane as indicated above, which is equipped with two inner jibs retracting into one another, comprising one outer jib as indicated above, and a second inner jib being placed in a laterally sliding way in the outer jib and a first inner jib being placed in a corresponding laterally sliding way in the second inner jib. Said crane is characterized in that the first inner jib functions as a traveller and that said crane also comprises a hoisting cable being guided from a reel over a guide which is connected with the outermost end of the second inner jib, then over a guide which is connected with the innermost end of the first inner jib and finally over a guide which is located near the outermost end of the first inner jib and the innermost end of the first inner jib being connected by means of a cable or the like via a guide in the innermost end of the second inner jib with the outermost end of the outer jib, in such a way that when the first inner jib travels from a first, respectively second, position to a second, respectively first, position, the second inner jib travels from a first, respectively second, position, to a second, respectively first, position and the vertical position of the hoisting cable remains constant.

The invention will now be explained in greater detail with reference to the enclosed drawings.
Figure 1 shows a longitudinal section of a crane according to the present invention in a first position.
Figure 2 shows a longitudinal section of a crane according to the present invention in a second position.
Figure 3 shows a longitudinal section of a crane according to the present invention in accordance with a second embodiment in a first position.
Figure 4 shows a longitudinal section of a device according to the present invention in accordance with a second embodiment in a second position.
Figure 5 shows a perspective view of a crane according to the present invention in accordance with the first embodiment.
Figure 6 shows a perspective view of a crane according to the present invention in accordance with a third embodiment in a first position.
Figure 7 shows a perspective view of a crane according to the present invention in accordance with a third embodiment in a second position.

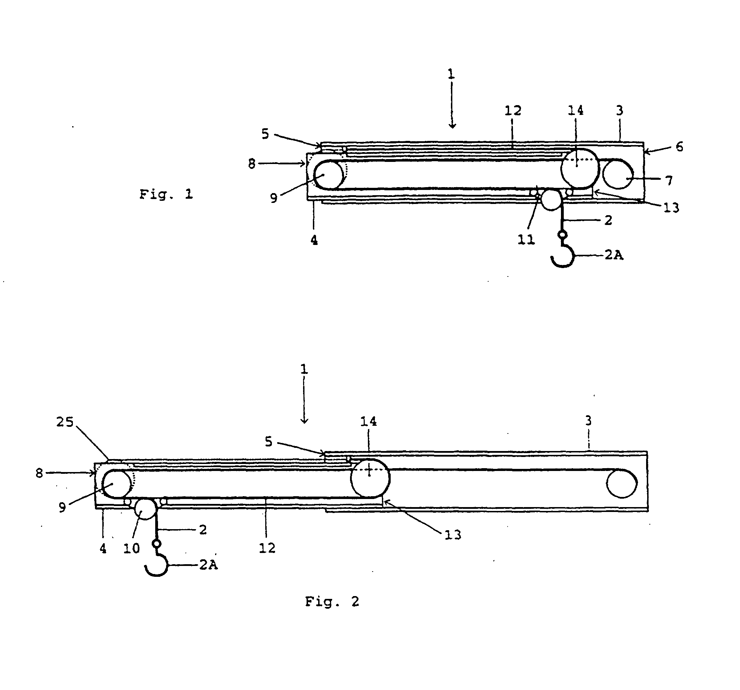

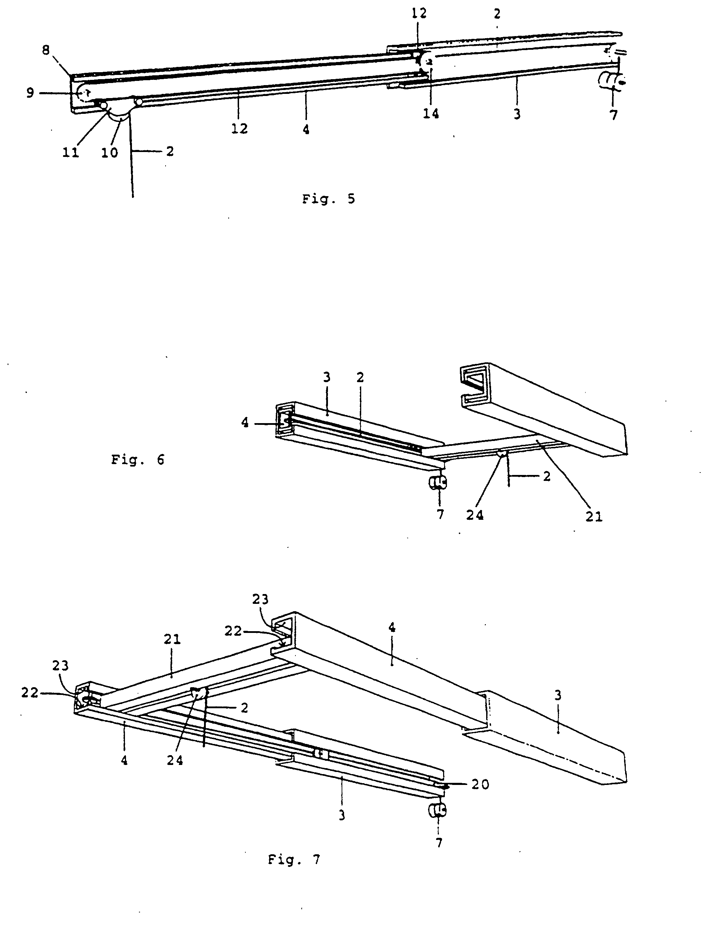

The crane 1 according to the present invention comprises an outer jib 3 and an inner jib 4, as shown in figures 1 and 2. The inner jib 4 is mounted in a laterally moving way in the outer jib 3. In order to be able to lift a load, i.e. move it in the vertical direction, a hoisting cable 2 is provided which in the embodiment shown in figures 1 and 2 is equipped with a fastening means 2A. At its other end the hoisting cable is connected with a reel 7, which in the embodiment shown is mounted near an end 6 of the outer jib 3. Fig. 5 shows a perspective view where the reel 7 is mounted outside the end of the outer jib 3. The inner jib is shown in fig. 1 in the most retracted position, whereas fig. 2 shows the situation in which the inner jib is in the most extended position. As the figures clearly show, the hoisting cable is guided from the reel 7 over a guide 9, which is fastened at the end 8 of the inner jib 4. The hoisting cable 2 is then guided back to a traveller 11, and is guided via a cable pulley 10, after which the hoisting cable hangs down vertically. It can also be derived clearly from the figures that the traveller 11 is connected via a second cable 12 or the like with the outer jib 3. To that end this second cable 12 or the like is guided via a guide 14, which guide 14 is fastened to the other end of the inner jib 4. To that end this second cable 12 or the like is guided back via this second guide 14 and is fastened to the foremost end of the outer jib 3.

It appears clearly from figures 1 and 2, that when the inner jib 4 travels out of the outer jib 3, the entire assembly of inner jib 4, guide 9, and guide 14, is extended via the end 5 out of the outer jib 3. The hindmost end (in the figures the most right-hand part) of the inner jib 4 will remain behind in the outer jib 3, to provide the stability required. As the traveller is connected with the hoisting cable 2 as well as with the second cable 12 or the like, and this second cable 12 has a fixed position and is connected at its other end with the end 5 of the outer jib 3, and the hoisting cable 2 is secured to the reel 7, the end of the hoisting cable 2 and the load hanging from the fastening means 2A will remain in a fixed vertical position when the inner jib 4 travels in the lateral direction through the outer jib 3. In this way it is possible to mount the reel, or any other winding means for the hoisting cable 2, not at or near the inner jib, but in a quite different position, so that the moment on the end of the inner jib 4 (or another position from where the hoisting cable 2 hangs down) is reduced, whereas, in addition, the advantage is obtained that the vertical height near the hoisting position, which is, at a fully extended inner jib, the end of the crane 1, is reduced strongly. In the embodiment shown the reel 7 is located at the end of the outer jib 3, but obviously it is also possible to place the reel outside the outer jib.

When the inner jib 4 is moved from a most retracted position in the outer jib 3 to a most extended position in the outer jib 3, the traveller 11 will be moved from a most right-hand position (see Fig. 1) to a most left-hand position (see Fig. 2), as this traveller 11 is connected via the cable 12 with the outer jib 3. The traveller 11 will therefore cover a distance, when the inner jib 4 is extended, which amounts to twice the extended length of the inner jib. In this way a load can be moved over a great distance without a large construction being required. Besides, the construction can be realised in such a way that the inner jib 4 and thus the traveller 11 can be moved manually in the horizontal direction. In the event of heavier loads use can be made, if necessary, of an auxiliary system, for example a hydraulic system, to let the inner jib retract and/or extend.

The traveller 11 can travel over the length of the inner jib 4, for example by means of roller wheels. These roller wheels may be guided over guidance paths which have been mounted on the inner jib 4. These guidance devices are not shown in figures 1 and 2.

The cable 12 may also consist of a chain. In that case the guide 14 may consists for example of a gearwheel. It is also possible, however, that the cable 12 consists of something else than a chain, for example a belt-shaped or ribbon-shaped connecting means.

If no vertical force is exercised on the hoisting cable 2 by a load, it is possible that because of the weight of the cable 12 (for example a chain 12), this chain will descend slightly, as a result of the effect of gravity on the chain 12, so that the traveller 11, including the cable pulley 10, will be pulled towards the right. This may be possible until the fastening means 2a which is fastened to the end of the hoisting cable 2 lies against the cable pulley 10 and/or the traveller 11. To avoid this, it is possible to fasten the cable 12 or the like to the traveller 11 and extend it from there and guide it further to a third guide 25 (shown in the figure with a dotted line) which is connected at or near the end 8 of the inner jib 4, to guide it around this end and then back to the end 5 of the outer jib 3, for example near the point where the other end of the cable 12 or the like is fastened to the outer jib. In that case a closed system of the cable 12 is obtained, so that it is impossible that it sags if no load is exercised downwards in the vertical direction on the hoisting cable 2.

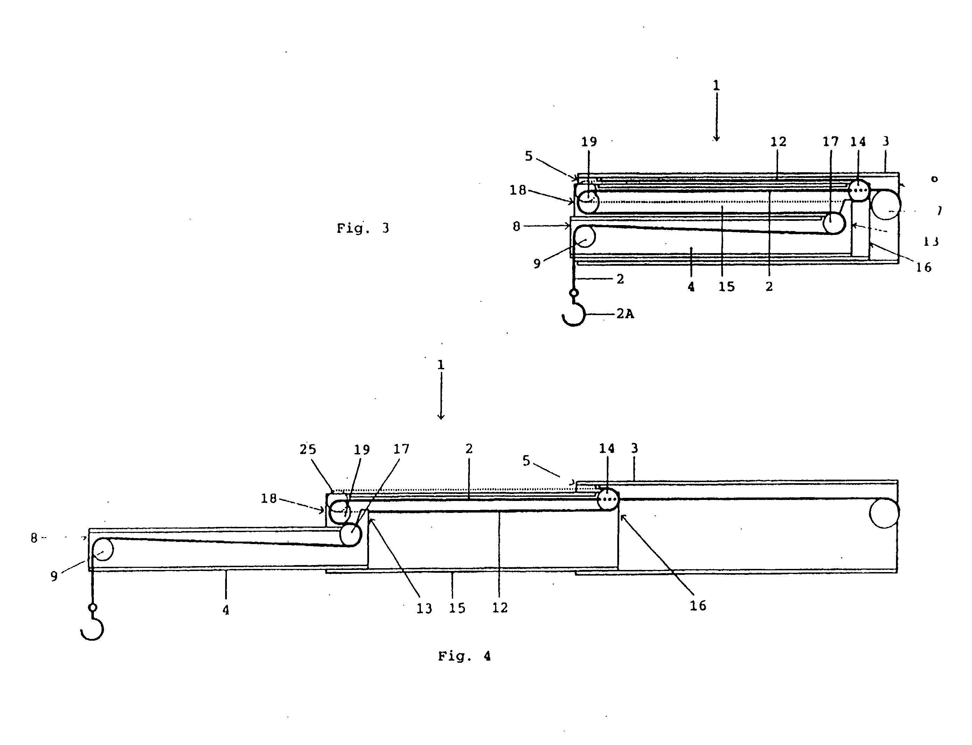

Figures 3 and 4 show a second embodiment of the present invention. In this embodiment the crane 1 consists of an outer jib 3 and two inner jibs 4 and 15. In the embodiment shown there is no traveller. Fig. 3 shows the crane in a first, most retracted position, in which the fastening means and the load hanging therefrom are located near the end 5 of the outer jib 3. Fig. 4 shows the crane 1 in a second, most extended position, in which the load is located near the end 8 of the inner jib 4. In this position the inner jib 15 is extended almost entirely from the outer jib 3 and the inner jib 4 is extended almost entirely from the inner jib 15. The load has travelled in the movement from the first to the second position a distance which equals the sum of the extended lengths of the two inner jibs 4 and 15. In the embodiment shown in figures 3 and 4 the hoisting cable 2 is guided from the reel 7 over a guide 19 which is connected with the end 18 of the inner jib 15, is then guided further over a guide 17 which is connected with the inner end 13 of the inner jib 4 and finally over a guide 9 which is located near the outer end 8 of the inner jib 4. The inner end 13 of the inner jib 4 is connected by means of a cable 12 or the like via guide 14 in the inner end 16 of the inner jib 15 with the outer end 5 of the outer jib 3. Such a system of guides and cables as shown assures that the load will always continue to hang in the same vertical position when the inner jibs are extended from or retracted into the outer jib.

According to the embodiment as shown in figures 3 and 4 it is possible to include the cable 12 or the like in a closed system, as described above with reference to figures 1 and 2. In that case the cable 12 is extended from the inner end 13 of the inner jib 4 and is guided over a guide 25 (shown in figures 3 and 4 by means of a dotted line), which is mounted in the outer end 18 of the inner jib 15, and is then connected with the outer end 5 of the outer jib 3, for example near the other end of the cable 12.

Other embodiments for guiding the hoisting cable 2 and the cable 12, in order to achieve the intended goal of keeping constant the vertical position of the end of the hoisting cable 2, will be obvious to a man skilled in the art after reading this description. Also embodiments in which a traveller (as shown in figures 1 and 2) moves automatically from the one end to the other end of the inner jib at the extension and retraction of the inner jibs, will be obvious to the expert.

Figures 6 and 7 show a third embodiment of the invention, where a first position and a second position, respectively, are shown. It can be seen clearly in these figures that the reel 7 is fastened in a position under the outer jib. To that end an extra guide 20 has been provided near the end 6 of the outer jib 3. In the embodiment of the invention shown in figures 6 and 7 the crane comprises two sets, placed in parallel, consisting each of an outer jib and an inner jib, whereas a cross-beam 21 has been provided (perpendicular in the embodiment shown, but that is not necessary) between these two sets. This crossbeam 21 fulfils the role of the traveller 11 as shown in figures 1 to 4 inclusive. At the movement of the inner jibs 4 out of the outer jib 3 from a most retracted position (as shown in figure 6) to a most extended position (as shown in figure 7), the crossbeam 21 will move from a hindmost position to a frontmost position. The crossbeam 21 can be guided for example by means of roller wheels (not shown) over the guidance surfaces 22, 23 on the inside of the inner jib 4. These roller wheels (not shown) can be guided over the guidance surfaces 22 as well as over the guidance surfaces 23. In the embodiment shown, the cable pulley 24, which is mounted in the crossbeam 21, has been mounted in a fixed position. It is also possible however, according to an alternative embodiment, to mount it in a mobile way over the length of the crossbeam 21. In that case it is possible to position a load to be moved in a two-dimensional direction.

It is also possible to manufacture the embodiment as shown in figures 6 and 7 with two parallel sets of three jib sections, such as these have been described with reference to figures 3 and 4. In such an embodiment the crossbeam 21 is connected in a rigid way with the two outermost ends 8 of the inner jibs 4.

It will be obvious that various adjustments of the embodiments described above and shown in the drawings are possible without leaving the scope of the invention. Thus it is possible to apply the invention in a vertical crane, instead of a horizontal crane as shown in the figures. Vertical, extending cranes are generally known, but in all cases make use of hydraulics to extend the individual jibs. The use of a cable system according to the present invention results in a significant reduction of weight, so that such cranes can be built much lighter. It is also possible, therefore, to use smaller diameters of the individual jibs, at the same strength, by adjusting the material thickness to the strength desired.

The crane according to the present invention can be used in many places, for example in vehicles, boats and the like. It is also possible to realise the crane as a mobile installation, which can be set up for example (for the purpose for removals or for moving large and heavy objects) in dwellings, for example by including the crane in a separate frame. The frame may in that case be fastened to a floor or be clamped between a floor and a ceiling, the crane being located near a window opening. In this way it is possible in a very simple way with the crane according to this invention, with opened windows, to hoist and move into the dwelling loads that are located outside the building on the ground floor. The great advantage of the crane according to the invention in such an application is that the crane can be set up on any floor and in any room where there is a window.

## Claims

1. Crane (1), comprising a hoisting cable (2), an outer jib (3) and at least one inner jib (4,15), which can travel laterally in the outer jib between a first, essentially retracted position and a second, at least partly extended position, where the inner jib (4,15) can be extracted from the outer jib (3) via a first end (5) of the outer jib (3) and where at the crane a reel (7) is provided for receiving the hoisting cable (2), wherein the reel (7) is connected at or near a second end (6) of the outer jib (3), and wherein the inner jib (4) comprises at its end (8) which can extend outwards, a guide (9) for guiding the hoisting cable, **characterized in that** the hoisting cable (2) is guided via the guide (9) over a cable pulley (10,17) which is connected with a traveller (11,4) which can travel over the longitudinal direction of the inner jib (4,15), and **in that** the traveller (11,4) is connected via a second cable (12) or the like with the outer jib (3), which cable (12) is guided via a second guide (14) connected to the end (13,16) which is directed inwards of the inner jib (4,15), in such a way that when the inner jib (4,15) travels in the outer jib from the first, respectively the second, position to the second, respectively the first, position, the vertical position of the end of the hoisting cable (2) remains constant and simultaneously the traveller (11,4) in the inner jib (4,15) travels from the one end (13,16, respectively 8,18) to the other end (8,18, respectively 13,16).

2. Crane according to claim 1, **characterized in that** the connection (12) comprises a chain and **in that** the guide (14) is a gearwheel.

3. Crane according to claims 1 or 2, **characterized in that** the hoisting cable (2) is equipped at its end with a fastening means (2A)

4. Crane according to any of the previous claims, **characterized in that** it is equipped with fastening means for fastening it to a vehicle or a boat.

5. Crane according to any of the previous claims, which is equipped with two inner jibs retracting into one another (3, 4, 15), comprising one outer jib (3) being as shown in claim 1, and a second inner jib (15) being placed in a laterally sliding way in the outer jib and a first inner jib (4) being placed in a corresponding laterally sliding way in the second inner jib (15), **characterized in that** the first inner jib (4) functions as said traveller (11) and that said crane also comprises a hoisting cable (2) being guided from a reel (7) over a guide (19) which is connected with the outermost end (18) of the second inner jib (15), then over a guide (17) which is connected with the innermost end (13) of the first inner jib (4) and finally over a guide (9) which is located near the outermost end (8) of the first inner jib (4) and the innermost end (13) of the first inner jib (4) being connected by means of a cable (12) or the like via a guide (14) in the innermost end (16) of the second inner jib (15) with the outermost end (5) of the outer jib (3), in such a way that when the first inner jib (4) travels from a first, respectively second, position to a second, respectively first, position, the second inner jib (15) travels from a first, respectively second, position, to a second, respectively first, position and the vertical position of the hoisting cable (2) remains constant.

6. Crane according to any of the previous claims, **characterized in that** one or several of the jibs are made of steel, aluminium or fibre-reinforced synthetic material, or a combination thereof.

7. Crane according to any of the previous claims 1-4, which is equipped with two parallel sets of an outer jib and an inner jib, the traveller (11) consisting of one crossbeam (21), which is located between the two parallel inner jibs, this crossbeam (21) being equipped with a cable pulley (24) over which the hoisting cable (2) is guided with its end, and which can travel laterally in the inner jibs.

8. Application of a crane according to any of the previous claims in a vertical hoisting crane.

9. Application of a crane according to any of the claims 1-7 in a building.

## Patentansprüche

1. Kran (1), bestehend aus einem Aufzugskabel (2), einem Außenausleger (3) und mindestens einem Innenausleger (4, 15), welcher seitwärts im Außenausleger zwischen einer ersten, meistens eingefahrenen Position und einer zweiten, zumindest teilweise ausgefahrenen Position auslenken kann, wobei der Innenausleger (4, 15) vom Außenausleger (3) aus über die erste Spitze (5) des Außenauslegers (3) ausgefahren werden kann und der Kran mit einer Winde (7) für das Aufzugskabel (2) bestückt ist, wobei die Winde (7) mit einer zweiten Spitze (6) des Außenauslegers (3) oder dem entsprechenden Nahbereich verbunden ist und wobei der Innenausleger (4) an der ausfahrbaren Spitze (8) aus einer Führung (9) für das Aufzugskabel besteht, **dadurch gekennzeichnet, dass** das Aufzugskabel (2) durch die Führung (9) über eine mit einem Laufwerk (11,4) verbundene Kabelrolle (10,17) geleitet wird, wobei dieses Laufwerk (11,4) in Längsrichtung des Innenauslegers (4,15) beweglich ist und über ein zweites Kabel (12) oder Ähnlichem mit dem Außenausleger (3) verbunden ist, dessen Kabel (12) über eine zweite Führung (14) mit der Spitze (13,16) verbunden ist, wobei diese Spitze (13,16) in der Weise im Innenausleger (4,15) nach innen gerichtet ist, dass die vertikale Position der Spitze des Aufzugskabels (2) beim Auslenken des Innenauslegers (4,15) von der ersten, bzw. der zweiten Position zur zweiten bzw. ersten Position im Außenausleger konstant bleibt und sich gleichzeitig das Laufwerk (11,4) im Innenausleger (4,15) von einer Spitze (13,16 bzw. 8,17) zur anderen (8,18 bzw. 13,16) bewegt.

2. Kran gemäß Anspruch 1, **dadurch gekennzeichnet, dass** die Verbindung (12) aus einer Kette und die Führung (14) darin aus einem Zahnrad bestehen.

3. Kran gemäß Anspruch 1 oder 2, **dadurch gekennzeichnet, dass** das Aufzugskabel (2) mit Befestigungselementen (2A) an dessen Spitze ausgerüstet ist.

4. Kran gemäß allen vorhergehenden Ansprüchen, **dadurch gekennzeichnet, dass** er mit Befestigungselementen zur Befestigung an einem Fahrzeug oder Boot ausgestattet ist.

5. Kran gemäß allen vorhergehenden Ansprüchen, der mit zwei ineinander einziehbaren (3,4,15) Innenauslegern ausgestattet ist und aus einem Außenausleger (3), wie in Anspruch 1, sowie einem zweiten Innenausleger (15) in einer Seitwärtsschiene im Außenausleger und einem ersten Innenausleger (4) in einer entsprechenden Seitwärtsschiene im zweiten Innenausleger (15) besteht, **dadurch gekennzeichnet,** dassder erste Innenausleger (4) als das genannte Laufwerk (11) dient und dass der genannte Kran außerdem mit einem Aufzugskabel (2) ausgestattet ist, das zunächst von einer Winde (7) über eine Führung (19) geleitet wird, die mit der äußersten Spitze (18) des zweiten Innenauslegers (15) verbunden ist, dann über eine Führung (17), die mit der innersten Spitze (13) des ersten Innenauslegers (4) verbunden ist und schließlich über eine Führung (9), welche sich in der Nähe der äußersten Spitze (8) des ersten Innenauslegers (4) und der innersten Spitze (13) des ersten Innenauslegers (4) befindet, wobei der erste Innenausleger (4) über ein Kabel (12) oder eine Führung (14) in der innersten Spitze (16) des zweiten Innenauslegers (15) mit der äußersten Spitze (5) des Außenauslegers (3) in der Weise verbunden ist, dass die vertikale Position des Aufzugskabels (2) konstant bleibt, wenn der erste Innenausleger (4) von einer ersten, bzw. zweiten Position zu einer zweiten, bzw. ersten Position auslenkt und sich der zweite Innenausleger (15) von einer ersten, bzw. zweiten Position zu einer zweiten, bzw. ersten Position bewegt.

6. Kran gemäß allen vorhergehenden Ansprüchen, **dadurch gekennzeichnet, dass** einer oder mehrere der Ausleger aus Stahl, Aluminium oder glasfaserverstärktem Kunststoff oder einer Kombination hergestellt ist/sind.

7. Kran gemäß allen vorhergehenden Ansprüchen 1-4, der mit zwei parallelen Sätzen aus einem Außenausleger und einem Innenausleger ausgestattet ist, wobei das Laufwerk (11) aus einer Traverse (21) besteht, die sich zwischen den zwei parallelen Innenauslegern befindet, wobei diese Traverse (21) mit einer Umlenkrolle (24) ausgestattet ist, über welche das Aufzugskabel (2) mit seiner Spitze geführt wird und welche seitwärts in den Innenauslegern verschiebbar ist.

8. Einsatz eines Krans gemäß allen vorhergehenden Ansprüchen an einen vertikalen Hebekran.

9. Einsatz eines Krans, gemäß allen Ansprüchen 1-7, in einem Gebäude.

## Revendications

1. Grue (1), composée d'un câble de levage (2), d'un bras externe (3) et d'au moins un bras interne (4, 15) qui peut se déplacer de manière latérale dans le bras externe entre une première position, essentiellement rétractée et une seconde, au moins en partie étendue, où le bras interne (4, 15) peut être extrait du bras externe (3) par une première extrémité (5) du bras externe (3) et où un enrouleur est fourni dans le but de recevoir le câble de levage (2), et où le bras interne (4) qui est composé à ses extrémités (8) (lesquelles peuvent s'étendre vers l'extérieur), d'un guide (9) pour le guidage du câble de levage (2), **caractérisé en ce que** ce câble soit conduit au travers du guide (9) sur une poulie à câble (10, 17), elle-même connectée avec un coulisseau (11, 4) qui peut se déplacer sur toute la longueur du bras interne (4, 15), et dans la mesure où le coulisseau (11, 4) est connecté à un second câble (12), ou avec le même genre de coulisseau sur le bras externe (3), dont le câble (12) est guidé au travers du second guide (14) qui est connecté à l'extrémité (13, 16) elle-même dirigée vers l'intérieur du bras interne (4, 15) de telle sorte que lors du déplacement du bras interne (4, 15) dans le bras externe de la première, et respectivement la seconde position vers la seconde, et respectivement la première position ; la position verticale de l'extrémité du câble de levage (2) demeure constante, en même temps que le coulisseau (11, 4) se trouvant dans le bras interne (4, 15) se déplace d'une extrémité (13, 16) à l'autre (8, 18) et respectivement (8, 18 et 13, 16).

2. Grue, selon la demande 1, **caractérisé en ce que** la connexion (12) soit composée d'une chaîne et que le guide (14) soit une roue d'engrenage.

3. Grue, selon la demande 1 ou 2, **caractérisé en ce que** le câble de levage (2) soit équipé à son extrémité de moyens de serrage (2A).

4. Grue, selon toute(s) les précédente(s) demande(s), **caractérisé en ce qu'**elle soit équipée de moyens de serrage afin d'être fixée sur un véhicule ou sur un bateau.

5. Grue, selon toute(s) demande(s) précédente(s), qui est équipée de deux bras internes rétractables l'un dans l'autre (3, 4, 15), composée d'un bras externe (3), comme indiqué dans la demande 1, et d'un second bras interne (15) étant placé dans un glissement latéral dans le bras externe et d'un premier bras interne (4), étant lui-même placé dans un glissement latéral correspondant, dans le second bras interne (15), **caractérisé en ce que** le premier bras interne (4) fonctionne car le dit coulisseau (11) et la dite grue sont aussi composés d'un câble de levage (2), guidé à partir de l'enrouleur (7) sur le guide (19), lequel est connecté à l'extrémité la plus éloignée (18) du second bras interne (15), puis au-dessus d'un guide (17) qui est connecté à l'extrémité la plus proche (13) du premier bras interne (4) et enfin au-dessus d'un guide (9) se trouvant près de extrémité la plus éloignée (8) du premier bras interne (4) et de l'extrémité la plus proche (13) du premier bras interne (4), lequel est connecté au moyen d'un câble (12) ou du même type via un guide (14) dans l'extrémité la plus proche (16) du second bras interne (15) avec l'extrémité la plus éloignée (5) du bras externe (3), de telle sorte que lors du déplacement du premier bras interne (4), de la première, et respectivement de la seconde position vers la seconde , et respectivement vers la première position, le deuxième bras interne (15) se déplace d'une première, et respectivement, d'une seconde position, vers une seconde, et respectivement une première position, la position verticale du câble de levage (2) reste constante.

6. Grue, selon toute(s) demande(s) précédente(s), **caractérisé en ce qu'**un ou plusieurs bras sont faits d'acier, aluminium ou de matériel synthétique renforcé en fibre, ou d'une combinaison.

7. Grue, selon les différente(s) demande(s) précédente(s) de 1 à 4, qui est équipée de deux jeux parallèles d'un bras externe et d'un bras interne, le coulisseau (11) composé d'une traverse (21), qui est située entre les deux bras internes parallèles, et qui (21) est équipée d'une poulie à câble (24) sur laquelle le câble de levage (2) est guidé avec son extrémité, et qui peut se déplacer latéralement dans les bras internes.

8. Application d'une grue selon toute(s) les précédente(s) demande(s), dans une grue de levage verticale.

9. Application d'une grue selon toute(s) les précédente(s) demande(s) de 1 à 7 dans un bâtiment.
